# EUROPEAN PATENT SPECIFICATION

(11) **EP 4 241 187 B1**
(45) Date of publication and mention of the grant of the patent: **02.12.2026**
(21) Application number: 21844857.9
(22) Date of filing: 17.12.2021
(51) Int. Cl.: G06F 21/53, G10L 17/22, G06F 3/16, G06V 40/20, G06F 21/32

(54) **UTILIZATION OF SANDBOXED FEATURE DETECTION PROCESS TO ENSURE SECURITY OF CAPTURED AUDIO AND/OR OTHER SENSOR DATA**
VERWENDUNG EINES SANDBOX-MERKMALSERKENNUNGSVERFAHRENS ZUR SICHERSTELLUNG DER SICHERHEIT ERFASSTER AUDIO- UND/ODER ANDERER SENSORDATEN
UTILISATION D'UN PROCESSUS DE DÉTECTION DE CARACTÉRISTIQUES EN BAC À SABLE POUR ASSURER LA SÉCURITÉ DE DONNÉES AUDIO ET/OU D'AUTRES DONNÉES DE CAPTEUR CAPTURÉES

(30) Priority: 12.02.2021 US 202163148968 P; 01.12.2021 US 202117540086
(43) Date of publication of application: 13.09.2023
(73) Proprietor: Google LLC, Mountain View, CA 94043 (US)
(72) Inventor: UGALE, Ahaan, Mountain View, California 94043 (US); VOLNOV, Sergei, Mountain View, California 94043 (US); MARCHIORI, Eugenio J., Mountain View, California 94043 (US); KAMATH, Narayan, Mountain View, California 94043 (US); MOKANI, Dharmeshkumar, Mountain View, California 94043 (US); LI, Peter, Mountain View, California 94043 (US); COENEN, Martijn, Mountain View, California 94043 (US); GANOV, Svetoslav, Mountain View, California 94043 (US); VAN SICKLE, Sarah, Mountain View, California 94043 (US)
(74) Representative: Chettle, John Edward
(86) International application number: PCT/US2021/064134
(87) International publication number: WO 2022/173508

(56) References cited:
- WO-A1-2015/047442
- WO-A2-2017/062128
- US-A1- 2012 054 741

## Description

### Background

Humans can engage in human-to-computer dialogs with interactive software applications referred to herein as "automated assistants" (also referred to as "digital agents," "interactive personal assistants," "intelligent personal assistants," "assistant applications," "conversational agents," etc.). For example, humans (which when they interact with automated assistants may be referred to as "users") can provide commands and/or requests to an automated assistant using spoken natural language input (i.e., utterances), which may in some cases be converted into text and then processed, by providing textual (e.g., typed) natural language input, and/or through touch and/or utterance free physical movement(s) (e.g., hand gesture(s), eye gaze, facial movement, etc.). An automated assistant responds to a request by providing responsive user interface output (e.g., audible and/or visual user interface output), controlling one or more smart devices, and/or controlling one or more function(s) of a device implementing the automated assistant (e.g., controlling other application(s) of the device).

As mentioned above, many automated assistants are configured to be interacted with via spoken utterances. To preserve user privacy and/or to conserve resources, automated assistants refrain from performing one or more automated assistant functions based on all spoken utterances that are present in audio data detected via microphone(s) of a client device that implements (at least in part) the automated assistant. Rather, certain processing based on spoken utterances occurs only in response to determining certain condition(s) are present.

For example, many client devices, that include and/or interface with an automated assistant, include a hotword detection model. When microphone(s) of such a client device are not deactivated, the client device can continuously process audio data detected via the microphone(s), using the hotword detection model, to generate predicted output that indicates whether one or more hotwords (inclusive of multi-word phrases) are present, such as "Hey Assistant", "OK Assistant", and/or "Assistant". When the predicted output indicates that a hotword is present, any audio data that follows within a threshold amount of time (and optionally that is determined to include voice activity) can be processed by one or more on-device and/or remote automated assistant components such as speech recognition component(s), voice activity detection component(s), etc. The audio data predicted to contain the hotword can also be processed by other on-device and/or remote automated assistant component(s). Further, recognized text (from the speech recognition component(s)) can be processed using natural language understanding engine(s) and/or action(s) can be performed based on the natural language understanding engine output. The action(s) can include, for example, generating and providing a response and/or controlling one or more application(s) and/or smart device(s)). Other hotwords (e.g., "No", "Stop", "Cancel", "Volume Up", "Volume Down", "Next Track", "Previous Track", etc.) may be mapped to various commands, and when the predicted output indicates that one of these hotwords is present, the mapped command may be processed by the client device. However, when predicted output indicates that a hotword is not present, corresponding audio data will be discarded without any further processing, thereby conserving resources and user privacy.

A user can install, on a client device, one or more automated assistant applications or other application(s). When an installed application includes hotword detection capabilities and corresponding rights are granted to that application during installation, the installed application will at least selectively have access to audio data that is captured via microphone(s) of the client device. This enables the application to process the audio data in, for example, determining whether a hotword is present in the audio data. However, enabling unchecked access of audio data to the application can present security vulnerabilities, such as exfiltration of audio data (or data derived from the audio data) in which no hotword was detected. These security vulnerabilities can be exacerbated in situations where the application is controlled by a malicious entity. More generally, security vulnerabilities can be presented by applications that can process sensor data (e.g., audio data, image data, location data, and/or other sensor data) while operating in the background and/or under many (or all) conditions. United States patent application publication no. US 2012/054741 A1 presents a computer system including an authentication service running in a virtual machine.

### Summary

Implementations disclosed herein are directed to improving security of sensor data (*e.g.,* audio data) that is at least selectively processed by a feature detection process (*e.g.,* a hotword detection process and/or a speaker verification process) of an application installed on a client device.

In some of those implementations, the feature detection process is executed in a sandboxed environment, such as an isolated process in the operating system, that is controlled by the operating system of the client device. Put another way, the operating system controls the constraints that are imposed by the sandbox, although the feature detection process itself can be controlled by an application that utilizes the feature detection process (e.g., the feature detection process is part of the application and can operate in concert with other non-sandboxed process(es) of the application).

Further, the operating system controls the provisioning of the sensor data to the sandboxed feature detection process and prevents the sandboxed feature detection process from egressing the sensor data. Rather, the operating system, responsive to the feature detection process indicating that the feature was detected in the sensor data, directly (i.e., not via the sandboxed feature detection process) provides the sensor data (and/or other sensor data) to a non-sandboxed interactor process of the application. As one example, if the feature detection process is a hotword detection process and indicates the hotword is detected in a segment of audio data detected via microphone(s) of the client device, the operating system can provide, to the non-sandboxed interactor process, that segment of audio data as well as segment(s) of audio data that precede and/or follow that segment. Security is improved by preventing the sandboxed feature detection process from egressing the sensor data and, instead, having the operating system directly provide the sensor data. For example, the sandboxed feature detection process can be prevented from egressing prior sensor data (or data derived therefrom), provided to the sandboxed feature detection process and determined not to include the feature, under the guise of providing the sensor data. For instance, it can be prevented from encoding such prior sensor data (or data derived therefrom) in egressed sensor data.

Moreover, in some implementations the sandboxed feature detection process can be allowed to egress only a limited quantity of data, only data that conforms to a defined schema, and/or to egress data only when the feature is detected. In these and other manners, security of the sensor data is improved by limiting when and/or what data can be egressed, mitigating the chance of egress of, for example, prior sensor data (and/or data derived therefrom). As described herein, in various implementations a human perceivable indication can be rendered when the sandboxed feature detection process indicates it has detected the feature, when it egresses data, and/or when sensor data is provided to the interactor process. For example, the perceivable indication can be a graphical and/or audible affordance that indicates the type of sensor data (*e.g.*, a picture of a mic when the sensor data is audio data). Optionally, the perceivable indication additionally or alternatively identifies the application or is selectable to reveal the application. In these and other manners, a user can ascertain, through the perceivable indication, that corresponding sensor data is being accessed by the application, further ensuring the security of the sensor data.

In various implementations, additional and/or alternative techniques can be utilized to further mitigate the risk of egress, from the sandboxed feature detection process, of prior sensor data (or data derived therefrom), provided to the sandboxed feature detection process and determined not to include the feature. For example, the operating system can, at intervals, cause memory of the sandboxed feature detection process that could store such data, to be cleared. For instance, the operating system can force restarting of the sandboxed feature detection process at intervals and/or fork the sandboxed feature detection process at intervals.

As alluded to above, some implementations disclosed herein are directed to improving security for audio data that is captured by a client device and provided to a component (also referred to as an "interactor process") based on identification of a hotword in the audio data. A hotword detection process operates in a "sandbox" such that egress of sensor data from the hotword detection process is restricted. A component or application that would utilize the sensor data is provided the data once the sandboxed hotword detector has determined the presence of the hotword. Thus, the audio data, or audio data stream, is not accessible directly by the interactor process until detection of a particular hotword has taken place.

By sandboxing the hotword detection process, the unauthorized egress of data is mitigated. The hotword detection process receives audio data for analysis and then sends one or more indications that a hotword is detected. However, the hotword detection process is restricted from sending the audio data itself, but instead indicates to an interaction manager that one or more components has been invoked by a hotword. The interaction manager then allows the interactor access to the audio stream. For example, the hotword detection process may receive a snippet of audio data that is likely to include a hotword. Upon confirmation of the presence of the hotword, the hotword detection process may be authorized, by virtue of the sandbox, to send only an indication that the hotword is present (e.g., a single bit signal). In some implementations, the hotword detection process may be authorized to send additional but limited data, such as an indication of the user that uttered the hotword, the hotword that was uttered, and/or additional information that does not specifically include the audio data. The unauthorized egress of data may be further mitigated by limiting the hotword detection process to egress of a limited number of bytes of information. Once detection of the hotword is detected by the hotword detection process, the voice interaction manager may provide an interactor with the audio data and optionally audio data that precede and/or follows the audio data. For example, the interactor process can be provided with the audio data in which the hotword was detected, as well as a stream of audio data that follows such audio data. The interactor process can then further process and act based on the received audio data. The interactor process can be non-sandboxed. For example, the interactor process can operate within the bounds of permissions granted by a user when the application was installed, and will not be constrained to the extent of the constraints imposed on the sandboxed hotword detection process.

To better improve security, the hotword detection process can be forced, by the operating system at intervals, to clear its memory. This can ensure that any data stored in memory by the hotword detection process is restricted to data generated since the last clearing of the memory. This can prevent a malicious hotword detection process from attempting to store audio data, or data derived from the audio data, and surreptitiously egress such stored data. As mentioned above, to mitigate surreptitious egress of such stored data, the sandbox can have restrictions on when, how much, and/or what types of data can be egressed. However, forcing the hotword detection process to clear its memory can additionally or alternatively mitigate surreptitious egress of such stored data. For example, forcing the clearing of memory can be used in combination with restrictions on egress of data, thereby mitigating opportunities for the hotword detection process to attempt to surreptitiously encode the stored data in what appears to be validly egressed data. As one example, one or more components of the operating system can clear the memory accessible to the hotword detection process, either at regular or irregular intervals, to limit access to audio data. In some implementations, this can be achieved by the operating system forcing the hotword detection process to restart. In some additional or alternative implementations, this can be achieved by the operating system utilizing forking to generate a new hotword detection process and prune the prior hotword verification process, thereby clearing any memory of the prior hotword detection process. Forking allows for a new process to be generated for the hotword detection process without requiring additional overhead components (e.g., libraries, configuration information) to be reloaded into memory of the sandbox. Thus, forking can enable effective clearing of memory in a more resource efficient manner than fully restarting the hotword detection process (which would require reloading overhead component(s)). The new hotword detection process then has no access to audio data that was accessible by the previous hotword detection process, which may be terminated once a replacement is generated.

As also alluded to above, in some implementations it may be desirable to inform a user when audio data is being provided to an application. Such an indication can improve security of audio data as the user can be informed when an application is accessing audio data (and optionally which application is accessing the audio data), enabling the user to identify and remove any application(s) that are accessing audio data at inappropriate times. However, because audio data may continuously (at least when certain contextual condition(s) are satisfied) be provided to a hotword detection process to enable monitoring for occurrence of a hotword, rendering the indication when the hotword detection process is processing audio data would result in the the user being constantly provided with an indication that audio data is being processed. For example, a device may have a graphical interface that allows for an indication to be displayed to the user when an application is accessing audio data. However, it would be undesirable to display the indication when the hotword detection process is processing audio data, because it would effectively render the indicator useless (i.e., it would always show the microphone as active), thereby lessening its effectiveness in improving security of audio data. Thus, implementations disclosed herein provide an indication to the user that the audio data is being provided to an application and/or interactor process only once the hotword has been detected by the sandboxed hotword detection process, which results in the operating system providing corresponding audio data to non-sandboxed process(es) of the application.

Accordingly, those implementations can promote audio data security by rendering cue(s) to enable the user to be aware when non-sandboxed process(es) are being provided with audio data. Moreover, through utilization of the sandboxed hotword detection process and related technique(s) disclosed herein, security of audio data that is provided to the sandboxed hotword detection process can also be ensured, while preventing the need to render the cue(s) when only the sandboxed hotword detection process is being provided with audio data. Again, preventing the need to render the cue(s) when only the sandboxed hotword detection process enables the cue(s) to be meaningful to the user.

Various examples are described herein with respect to processing of audio data using a sandboxed hotword detection process. However, implementations disclosed herein can process audio data using additional and/or alternative process(es). For example, a speaker identification process can operate in the sandbox along with the hotword detection process. The speaker identification process can process audio data, detected by the hotword detection process to include a hotword, to perform text-dependent speaker identification (TDSID). An indication of the user account, if any, determined from the TDSID to have provided the hotword can optionally be provided as part of the limited data that is allowed to egress the sandbox.

Further, implementations disclosed herein can additionally and/or alternatively be utilized in sandboxing other process(es) that process additional and/or alternative sensor data. For example, implementations can require a gaze and/or a gesture detection process to operate in a sandbox process. The gaze and/or gesture detection process can at least selectively process image data to determine whether a gaze of a user and/or a gesture of a user is intended to invoke one or more components. For example, an application (e.g., an assistant application) can be invoked responsive to detection of a gaze of a user that is directed to the client device and that persists for more than a threshold duration of time. When the sandboxed detection process determines that a particular gaze and/or gesture has been detected, it can provide an indication to the operating system and, in response, the operating system can provide the image data, subsequent image data, and/or audio data to a corresponding interactor process of the application. Limits on egress of data can be imposed on the sandbox, to prevent nefarious egress of image data (or data derived therefrom) by the detection process. Further, an indication that image data is being processed can be rendered when the operating system provides the image data to the interactor process, but not provided when it is being provided only to the secure sandboxed detection process.

As another example, a geofence entry detection process of an application can be forced to operate in a sandbox. The geofence entry detection process can at least selectively process GPS and/or other location data to determine whether the client device has entered one or more geofences. When the sandboxed geofence entry detection process determines that a particular geofence has been entered, it can provide an indication to the operating system and, in response, the operating system can provide the location data to a corresponding interactor process of the application. Limits on egress of data can be imposed on the sandbox, to prevent nefarious egress of location data (or data derived therefrom) by the detection process. Further, an indication that location data is being processed can be rendered when the operating system provides the location data to the interactor process, but not provided when it is being provided only to the secure geofence entry detection process.

The above description is provided only as an overview of some implementations disclosed herein. These and other implementations of the technology are disclosed in additional detail below.

It should be appreciated that all combinations of the foregoing concepts and additional concepts described in greater detail herein are contemplated as being part of the subject matter disclosed herein. For example, all combinations of claimed subject matter appearing at the end of this disclosure are contemplated as being part of the subject matter disclosed herein.

### Brief Description of the Drawings

FIG. 1 depicts an example environment in which implementations disclosed herein may be implemented.
FIG. 2 depicts an example interface that may be provided via a client device.
FIG. 3 depicts an example of interactions that may occur between components illustrated in FIG. 1.
FIG. 4 depicts a flowchart of an example method according to various implementations described herein.
FIG. 5 depicts a flowchart of another example method according to various implementations described herein.
FIG. 6 depicts an example architecture of a computing device, in accordance with various implementations.

### Detailed Description

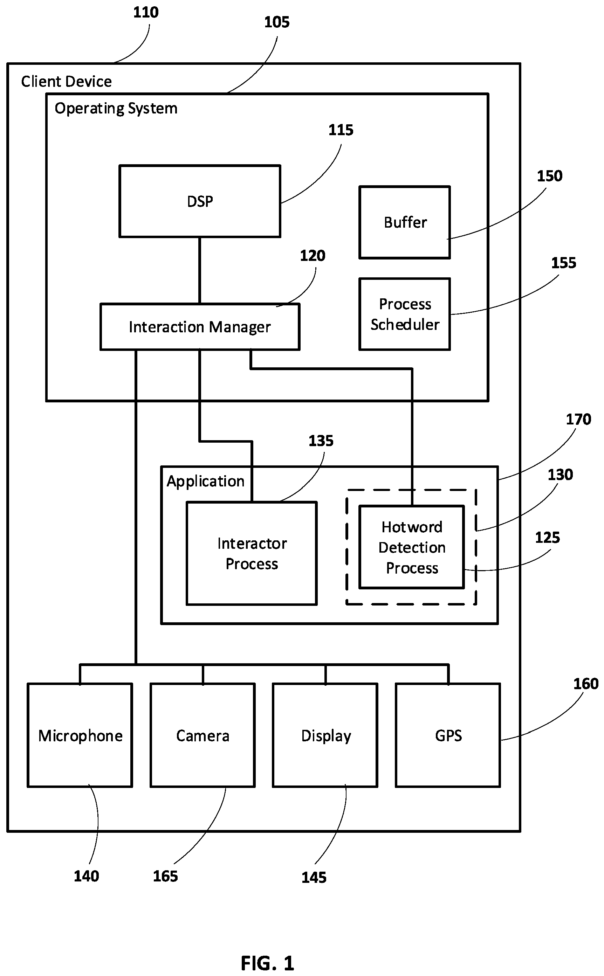

FIG. 1 illustrates an example environment in which implementations described herein may be implemented. The environment includes a client device 110 with an operating system 105. The client device 110 optionally may utilize a digital signal processor (DSP) 115 to process audio data and/or to process other sensor data. In some implementations, the DSP 115 can be utilized, by the operating system 105 and/or by application(s) installed on the operating system 105, to perform certain low power processing of sensor data. For example, the DSP 115 can be utilized to at least selectively process captured audio data to determine likelihood that the audio data includes human speech (e.g., voice activity detection) and/or to determine a likelihood that the audio data includes any of one or more hotwords.

The operating system may have access to one or more buffers 150 to store audio data while the data is being processed by one or more components. Operating system 105 may store a portion of the audio data in one or more buffers 150 and provide DSP 115 with at least a portion of the audio data and/or access to buffer 150. For example, interaction manager 120 may store audio data as it is being provided, with a limitation on the amount of data (e.g., a storage size of the data, a set duration of audio data) that is being stored during processing by the DSP 115 and/or hotword detection process 125. In instances where interactor process 135 is given permissions to access audio data, at least a portion of the audio data stored in buffer 150 may be provided to the hotword detection process 125. For example, any audio data in buffer 150 may be provided to the hotword detection process 125, as well as access granted to the input stream of the microphone 140. In some implementations, this may include audio that was uttered before the hotword and/or after the hotword.

In implementations where the DSP 115 is included and is utilized to determine likelihood that audio data includes human speech and/or likelihood that the audio data includes hotword(s), providing of such audio data (and optionally preceding and/or following audio data) to other process(es), that don't operate on the DSP 115, can be contingent on the likelihood(s) satisfying threshold(s). For example, the DSP 115 can be utilized to perform initial hotword detection on audio data and, if the initial hotword detection indicates a hotword is present, the audio data can be provided to a hotword detection process 125 that operates within a sandbox 130 and that can utilize higher power processor(s) (relative to the DSP 115). The DSP 115 is lower power (relative to the other processor(s)) and can utilize smaller footprint and less robust and/or accurate model(s) (relative to model(s) utilized by a sandboxed hotword detection process) in performing the initial hotword detection. The initial hotword detection performed on the DSP 115 can over trigger (i.e., have many false positives), but many of those false positives will be caught by the more robust and/or accurate sandboxed hotword detection process 125. Accordingly, the initial hotword detection process can effectively serve as an initial loose filter so that the sandboxed hotword detection process 125 need not analyze all captured audio data. This can conserve power resources since the initial hotword detection process utilizes the DSP 115 and not the more resource intensive processor(s) utilized by the sandboxed hotword detection process 125. It is noted that, in implementations where the DSP 115 is included and is utilized to perform initial hotword detection, sandboxing of the initial hotword detection by the DSP 115 may not be necessary to ensure security of the audio data. This can be due to, for example, hardware constraints of the DSP 115 preventing robust processing of audio data and/or preventing robust storing of resulting data from the processing, and/or egress of data from the initial detection by the DSP 115 being constrained (e.g., to only an indication of the hotword being initially detected).

As referenced above, the hotword detection process 125 is contained within a sandbox 130 to separate the hotword detection process 125 from other processes operating on the operating system 105 and to constrain the ingress of data to and egress of data from the hotword detection process 125. For example, the sandbox 130 can restrict ingress of data, to the hotword detection process 125, to audio data and, optionally, to limited other data (e.g., a confidence measure determined by an initial hotword detection process). As another example, the sandbox 130 can restrict egress of data to egress of only a certain quantity of bits at a given egression instance, can limit a frequency of regression instances, and/or can require egression instances conform to a certain data schema. The hotword detection process 125 can be part of (e.g., controlled by) an application 170 executing on the operating system 105, although the hotword detection process 125 will be constrained by the limitations of the sandbox 130 that is imposed by the operating system 105. The application 170 further includes an interactor process 135, which performs one or more tasks based on input sensor data, such as receiving audio data and performing one or more tasks based on the presence of a hotword in the audio data. The operating system 105 further includes an interaction manager 120 which regulates the flow of sensor data between the various components of the operating system 105 and application 170. For example, the interaction manager 120 may provide an interactor process 135 with permissions to access sensor data and/or may receive one or more indications from the hotword detection process 125 that a hotword has been detected from audio data.

In some implementations, the sandbox controlled by the operating system can prevent network access to process(es) operating within the sandbox. For example, the hotword detection process 125 may be restricted from accessing a network (e.g., restricted from accessing network interface(s) of the client device) to further improve security and further prevent egress of the audio data. In some instances, the interactor process can have network access and can send the audio data after the audio data has been sent to the interactor process by the operating system. In various implementations, the sandbox controlled by the operating system restricts which operating system functionality or functionalities are available for utilization by the process(es) operating within the sandbox. For example, the operating system (e.g., the interaction manager 120) can enable the process(es) operating within the sandbox to utilize only certain application programming interface(s) (API(s)) of the operating system and/or to utilize only certain aspects of API(s), while preventing access to other API(s) and/or to other aspects of API(s). In enabling the process(es) to utilize only certain aspects of an API, a proxy API can be used (e.g., can implemented by the interaction manager 120), that interfaces between the process(es) and the API, where the proxy API is an intermediary that allows utilization of certain aspects of the API while preventing utilization of other aspects of the API. As one particular example, the operating system can enable the process(es) to access all or aspects of basic API(s) that are required for running apps within the operating system. As another particular example, the operating system can additionally or alternatively enable the process(es) to access all or aspects of: an API that enables interaction with the interaction manager 120, an API that provides access to microphone audio data, and/or an API that enables publishing of certain data to other sandboxed process(es) (e.g., sandboxed process(es) that can utilize the certain data for federated learning). API(s) or API aspect(s) to which access is not explicitly enabled, can be fully inaccessible to the process(es) operating within the sandbox.

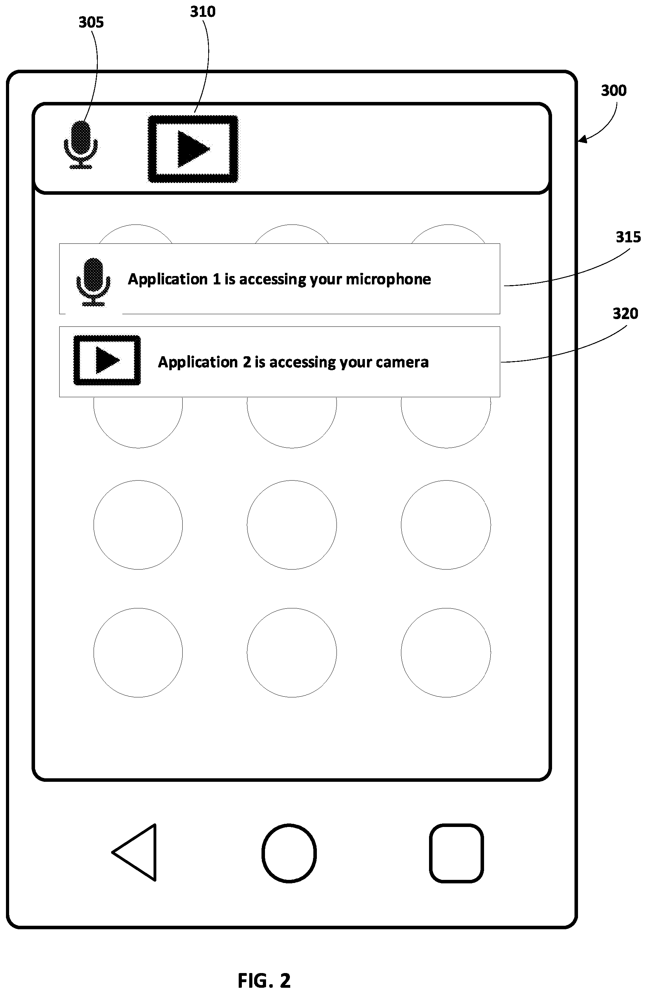

The client device 110 includes a microphone 140 for capturing audio data, a camera 165 for capturing video and/or images, and a GPS component 160. Each of these components are a sensor to capture and provide sensor data. In some implementations, one or more of the components may be absent. The microphone 140 can, in some implementations, include an array of multiple microphones, which can include near-field and/or far-field microphone(s). In some implementations, audio data captured via the microphone 140 is continuously provided to interaction manager 120. The client device 110 further includes a display 145, which may be utilized to provide a graphical interface to a user. In some implementations, the graphical interface can selectively include an indication that sensor data is being utilized by one or more applications. For example, referring to FIG. 2, an example interface 300 is provided. The interface 300 may include one or more graphical elements that change appearance and/or appear when an application 105 is being provided with sensor data. For example, indicator 305 may appear and/or change appearance (e.g., a different image, change color, change size) when a non-sandboxed process of application 105 is utilizing audio data from microphone 140. Additionally, indicator 310 may appear and/or change appearance when a non-sandboxed process of application 170 is accessing image data from camera 165. In some implementations, GPS 160 may capture location data and one or more indicators may appear when a non-sandboxed process of application 105 accesses the location data. In some implementations, a notification 315 may be provided to the user when a non-sandboxed process of application 105 accesses audio data and notification 320 may be provided when a non-sandboxed process of application 105 is accessing video and/or image data. It is noted that notifications 315 and 320 indicate not only that corresponding sensor data is being accessed, but also indicate the corresponding application accessing the sensor data. In some implementations, notification 315 can be provided in lieu of indicator 305 and notification 320 can be provided in lieu of indicator 310. In some other implementations, notification 315 can be provided in response to a user selection of indicator 305 and notification 320 can be provided in response to a user selection of indicator 310.

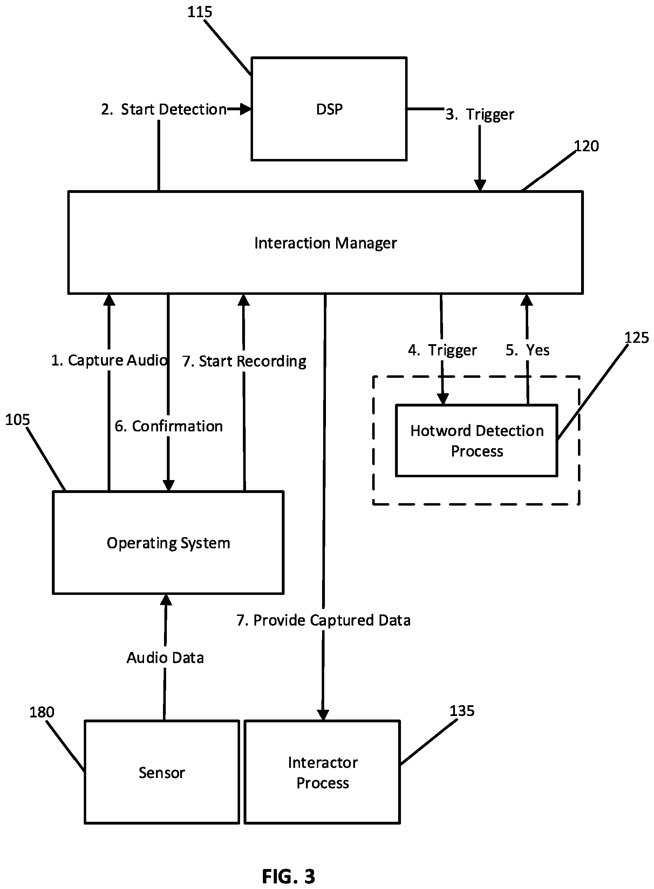

Referring to FIG. 3, an example is illustrated of interactions that can occur between components illustrated in FIG. 1. As illustrated, feature data (e.g., audio data, image data, location data) is continuously flowing from a sensor 180 of client device 110 to the operating system 105. As the audio data is received by the operating system 105, it is captured (see arrow #1) for additional analysis. Operating system 105 may store a portion of the audio data in one or more buffers 150 and provide DSP 115 with at least a portion of the audio data and/or access to buffer 150 (see arrow #2).

Digital signal processor (DSP) 115 receives audio data from the interaction manager 120 and determines whether the audio data includes human speech. The DSP may be a low power-consuming circuit that is always active, or is always active when certain contextual condition(s) are met (e.g., certain time(s) of day, when the client device 110 is in certain state(s), etc.). The DSP 115 can determine likelihood that audio data includes human speech and/or likelihood that the audio data includes hotword(s). In instances where speech is likely detected (e.g., a likelihood score that satisfies a threshold value), the audio or a portion of the audio may be provided to the hotword detection process 125 for further analysis to determine if the detected speech includes a hotword. Accordingly, the initial hotword detection process can effectively serve as an initial loose filter so that the sandboxed hotword detection process 125 need not analyze all captured audio data. However, as a tradeoff for consuming minimal resources, DSP 115 may downsize incoming streams of audio data such that the analysis of DSP is less robust than hotword detection process 125. In some implementations, such as those where power consumption is not a consideration, DSP 115 may not be present at all and captured audio data may be provided directly by the interaction manager 120 to hotword detection process 125. In some implementations, in addition to, or instead of processing audio utilizing the DSP 115, a portion of the audio data may be provided to a remote device for additional analysis, such as detecting the presence of a hotword with a more robust detector.

In some implementations, at least some portion of the audio data is provided to DSP 115 to allow the DSP 115to detect likely speech in the audio data (see arrow #2). The analysis by the DSP 115 may be triggered (see arrow #3) with a high rate of false positives due to, for example, background noise included in the audio data and/or other audio that is not speech intended to invoke an application. Further, because DSP 115 is a low-power consuming device, audio channels may be downsized to allow for faster processing time with minimized resource consumption. In some implementations, DSP 115 may determine, using one or more neural networks, likelihood that the audio data includes human speech. If the likelihood measure meets a threshold, the trigger may be provided to the interaction manager 120.

The hotword detection process 125 utilizes one or more hotword detection models to determine if one or more hotwords are included in audio data. In some implementations, hotword detection process 125 may recognize particular hotwords to invoke an assistant application (e.g., "OK Assistant," "Hey Assistant") or other application 170. In some cases, hotword detection process 125 may recognize different sets of hotwords in different contexts (e.g., time of day) or based on running applications (e.g., foreground applications). For example, if a music application is currently playing music, the automated assistant may recognize additional hotwords such as "pause music", "volume up", and "volume down."

Although continuously processing audio data can be necessary for recognizing hotword utterances in the audio data, unwanted access to audio data from one or more applications can present security vulnerabilities, such as data exfiltration and eavesdropping. In addition, this access can result in degradation of data privacy and information security, as persons approximate to the client device 110 may carry on conversations not intended for the microphone 140 are sent to the operating system 105 for the interactor process 135. The continuous accessing of the audio data acquired via the microphone 140 can occur as a result of unintentional or intentional configuration of the interactor process 135 to exfiltrate audio data that is unwanted by the user. In either case, the application 170 can become vulnerable to security and privacy lapses. Such vulnerabilities can be exacerbated when the configuration of an application to continue to access the audio data acquired via the microphone is done by a malicious entity. Thus, a notification and/or alert that is provided to the user when an application is accessing sensor data may improve security measures by ensuring that the user is aware when sensor data is being transmitted.

As previously described, an interface provided to the user via a display on client device 110 may indicate when the microphone or other sensor is active and alert the user via an icon or other visual or audio indication. For example, referring again to FIG. 2, indicators 305 and 310 and/or notifications 315 and 320 may be displayed when audio and/or video data are being utilized by an application. However, this is not practical in instances where audio data is being utilized to detect a hotword but is not being processed by an application. For example, in instances where audio data is being stored in buffer 150 for further analysis by DSP 115 and/or hotword detection process 125 for the purpose of detecting a hotword, an indication of audio data being provided to an application may be constant. This is undesirable because the user will be unaware, based on the indication that the microphone is on, of what application is accessing the audio data. This can additionally or alternatively be undesirable since when DSP 115 and/or hotword detection process 125 are processing audio data, the audio data is prevented from being transmitted to remote device(s) (e.g., due to sandboxing of hotword detection process 125 and constraints on DSP 115), and the user may have no security concerns with such local only processing. Further, the DSP 115 often triggers on non-speech audio data, resulting in a significant number of false positive triggers, which would render the microphone indication as "on" a significant amount of time when the audio data is not being sent to interactor process 135. Thus, it is preferred that an indication is provided only once a hotword has been detected and the buffered audio data and/or access to the audio stream from the microphone 140 has been provided to an agent application via the interactor process 135.

To avoid audio data being provided to an application without authorization, the hotword detection process 125 is contained within a secure sandbox 130. The sandbox 130 regulates what data is provided to an interactor process of an application, thus alleviating security concerns related to an application eavesdropping or exfiltrating audio data without the user's knowledge. Therefore, the hotword detection process 125 may be limited in what information it egresses to an interactor process 135. For example, hotword detection process 125 may receive a portion of the audio data stored in buffer 150 to determine whether a hotword is present in the audio data. If hotword detection process 125 determines that a hotword is present, an indication of the hotword may be provided to interaction manager 120 indicating that one or more applications has been invoked by the user via the hotword. Once the interactor process 135 has been provided with the audio data, the interface may be updated to provide an indication that the audio data is being accessed. Thus, the user is alerted that an application is using the audio data without the drawback of the "microphone in use" indication being constantly active, or active more than when the audio data is being used by an application other than the operating system 105.

Once likely human speech has been detected, trigger (Arrow #4) is sent to hotword detection process 125 to indicate that human speech was detected with a threshold likelihood in the audio data by the DSP 115. At least a portion of the audio data (e.g., the portion of audio data stored in a buffer) may be provided with the trigger (or in place of the trigger). The hotword detection process 125, which is sandboxed to limit egress of data, determines whether the audio data includes a hotword. If a hotword is detected, hotword detection process 125 provides interaction manager 120 with confirmation of the hotword (Arrow #5). In some implementations, the egress of data may include only an indication that the hotword has been detected (i.e., "yes/no"). In some implementations, the hotword detection process 125 may provide additional information to the interaction manager 120, such as information regarding the user that uttered the hotword. In some implementations, hotword detection process 125 may provide confirmation of the presence of a hotword based on one or more other conditions, such as only when a particular application is being accessed or at a particular time of day. In some implementations, the hotword detection process 125 may always send a confirmation when a hotword is detected and interaction manager 120 or another component may determine whether some other condition has been satisfied.

As an example, operating system 105 may record a small snippet of audio data captured by microphone 140, which is stored in buffer 150. The DSP 115 may analyze the audio data and determine that the audio data includes human speech with a threshold likelihood. The interaction manager 120 may then provide the recorded audio data to hotword detection process 125, which is contained within sandbox 130. Based on the audio data, hotword detection process 125 may determine that the audio data includes the hotword "OK Assistant." Because hotword detection process 125 is sandboxed 130, it is unable to directly provide the audio data to an interactor process 135, which may be configured to further process audio data. Instead, hotword detection process 125 may send an indication to interaction manager 120 that a hotword has been uttered by a user. Interaction manager 120 may then allow access to an interactor process 135 for that application 170. Once the interactor process 135 has been provided access to the audio data, an indication of the microphone 140 processing audio data, as described herein, may be provided to the user via display 145.

In some implementations, hotword detection process 125 may provide additional information regarding the hotword utterance to the interaction manager 120 and/or directly to the interactor process 135. This may include, for example, information regarding the user that uttered the keyword. In some implementations, egress of information may be limited to a particular number of bytes of information. Thus, the hotword detection process 125 is not permitted (by the sandbox 130) from providing enough data to effectively transmit any of the audio data. For example, hotword detection process 125 may provide an indication that is less than or equal to a size threshold, such as less than 10 bytes. Such a limitation allows the hotword detection process 125 to provide, for example, an indication of the speaker of the hotword while not having enough message space to send meaningful audio data.

In some implementations, sandbox 130 may limit output from the hotword detection process 125 to a particular format or data schema so that it is constrained to particular types of data. In some implementations, any indications provided by the hotword detection process 125 may be encrypted to better ensure that other applications and/or components may not surreptitiously intercept the communication between the hotword detection process 125 and the interaction manager 120. Indications may include, for example, a flag indicating that a keyword was uttered, an indication of the keyword that was uttered, user information associated with the user that uttered the hotword, and/or other indications that a hotword has been detected.

Once the hotword detection process 125 has determined that a hotword has been uttered in the audio data and further has provided interaction manager 120 with an indication, as described above, operating system 105 may be provided with confirmation that audio data can be recorded and/or provided to one or more components. Referring again to FIG. 3, confirmation (Arrow #6) may include authorizing operating system 105 to begin recording additional audio data (Arrow #7) and/or to send already stored audio data to interactor process 135 to perform additional analysis. As illustrated, hotword detection process 125 does not directly provide the audio data but instead the audio data is provided to the interactor process 135 via interaction manager 120.

In some implementations, interactor process 135 may be provided with only audio data that has already been captured. In some implementations, interactor process 135 may be provided with only audio data that was captured after the utterance of the hotword. For example, the audio data may include a user saying something unrelated to invoking the hotword detection process, which the hotword detection process 125 determines is not a hotword. Once a hotword (e.g., "OK Assistant") is identified in the audio data, the interactor process 135 may be provided with audio data that has been stored and that occurs after the hotword, and/or be provided with additional audio that has been captured from the microphone 140. In some implementations, the interactor process 135 may be provided with additional audio data that occurred before the utterance of the hotword. As one example,

As an example, a user may utter the phrase "OK, Assistant, turn on the lights." The interaction manager 120 may receive all or a portion of the audio data and, optionally, send to DSP 115 to determine whether the audio data includes human speech. Once the speech has been detected with a threshold likelihood, the audio data and/or a portion of the audio data can be provided to the hotword detection process 125. Hotword detection process may then determine that "OK, Assistant" is a hotword and send an indication to interaction manager 120 that the term is included. Interaction manager 120 may then provide access to the audio data and/or additional audio data for further processing, such as performing speech recognition.

In some implementations, an interactor process 135 may be provided with access to the audio data only in instances where one or more additional conditions have been met. For example, hotword detection process may determine that a hotword of "Volume Up" was uttered in the audio data and send an indication to the interaction manager 120. The interaction manager 120 may then determine whether an application that is a target for the hotword (e.g., a music application) is currently active before granting the application access to the audio stream. In some implementations, conditions for allowing access to the audio data may be conditioned on, for example, the device that captured the audio data, the location where the audio data was captured, a time when the audio data was captured, and/or the identity of the user that uttered the hotword.

In some implementations, to further increase security measures by limiting the ability of the hotword detection process 125 to export information that is not intended for an interactor, one or more components of hotword detection process 125 and/or interaction manager 120 may clear the memory of hotword detection process 125 to ensure it has as little information as immediately necessary. In some implementations, interaction manager 120 may have a process scheduler 155 that controls the hotword detection process 125. At intervals, process scheduler 155 may generate a new hotword detection process 130. This may be via forking, whereby a new verification service is generated while additional libraries utilized by the verification service remain in memory. Such a process reduces the overhead required to create a new verification service. Once the new service has been created, the process where the original hotword detection process 125 was executing may be terminated. Thus, the new service does not have access to any of the previous information that was accessible to the original hotword detection process 125.

In some implementations, indications and/or other data egressed by the hotword detection process 125 can be stored for further verification that such data does not include more information that is permitted by the sandbox (e.g., to ensure security of the audio data). For example, when the hotword detection process egresses data, the contents of the egressed data, as well as a corresponding timestamp indicating when the data was egressed, can be stored in entries locally at the client device. The entries can later be reviewed by one or more security components or humans to further ensure that the sandbox is in place and is not permitting egress of additional information, such as the audio data. For example, the entries can be securely transmitted from the client device to remote server(s) for review by security professionals.

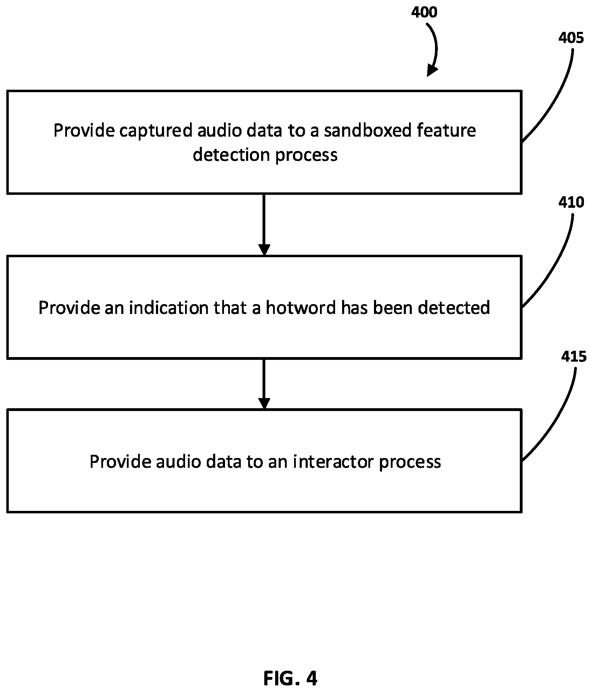

Fig. 4 depicts a flowchart illustrating an example method 400 of processing audio data to identify a hotword. For convenience, the operations of the method 300 are described with reference to a system that performs the operations, such as the system illustrated in FIG. 1 and FIG. 2. This system of method 300 includes one or more processors and/or other component(s) of a client device. Moreover, while operations of the method 400 are shown in a particular order, this is not meant to be limiting. One or more operations may be reordered, omitted, or added. As described herein, operating system 105 may be executing via one or more processors of a device, such as client device 110 and/or one or more cloud-based computer systems.

At step 405, captured audio data is provided to a sandboxed feature detection process. The feature detection process may share one or more characteristics with hotword detection process 125. In some implementations, only a portion of the captured audio data is provided to the feature detection process. For example, the feature detection process may receive audio data of a certain size or duration. In some implementations, a DSP 115 may first process the audio data to determine whether the audio data includes human speech and provide the audio data to the feature detection process (e.g., hotword detection process 125). The feature detection process is situated within a sandbox that limits the egress of data from the process. Some components, such as the interaction manager 120 and interactor process 135 are non-sandboxed, wherein those components are not restricted from sending and/or receiving data.

At step 410, an indication of an audio feature detected by the sandboxed feature detection process is provided to the operating system and/or a component executing via the operating system. In some implementations, the indication is restricted based on the sandbox in which the feature detection process is situated. For example, referring to FIG. 1, hotword detection process 125 may provide an indication to interaction manager 120 that a hotword has been detected. The indication may include additional information, such as an identity of a user that uttered the hotword. In some implementations, egress of information from the feature detection process may be limited by a particular defined data schema. In some implementations, egress of information from the feature detection process may be limited by size, such as indications that are smaller than 10 bytes. By limiting the information that is allowed to be provided by the audio feature detection process, audio data is restricted from being provided to one or more components directly from the feature detection process.

At step 415, the captured audio data is provided to a non-sandboxed interactor process 135. The audio feature detection process is restricted from directly sending audio data, as previously described. Instead, an intermediary, such as interaction manager 120, sends the audio data to an authorized interactor process 135. Thus, audio data that is utilized by hotword detection process 125 is unable to be egressed from the service. In some implementations, to further ensure that the audio feature detection process is unable to send audio data, the memory that is accessible by the audio feature detection process may be periodically cleared and/or the process may be terminated and restarted. This may occur at regular intervals or at irregular intervals to ensure that another non-sandboxed component cannot egress data surreptitiously. In some implementations, the operating system may utilize forking, as described herein, to generate a new process. Clearing the memory at irregular intervals may ensure a higher level of security by preventing an application from determining when the memory is being cleared and exfiltrating data before the memory has been cleared. Irregular intervals may include clearing memory once a certain amount of data has been received, whenever the client device 110 is not active, and/or only once DSP 115 has performed the initial speech detection.

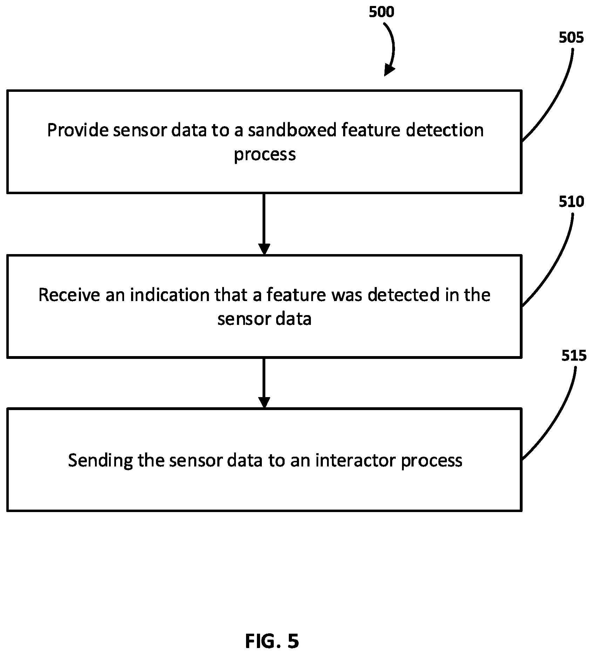

Fig. 5 depicts a flowchart illustrating an example method 500 of processing sensor data to identify a feature using a sandboxed detection process. For convenience, the operations of the method 500 are described with reference to a system that performs the operations, such as the system illustrated in FIG. 1 and FIG. 3. This system of method 500 includes one or more processors and/or other component(s) of a client device. Moreover, while operations of the method 500 are shown in a particular order, this is not meant to be limiting. One or more operations may be reordered, omitted, or added.

At step 505, sensor data is provided to a sandboxed feature detector process. In some implementations, the sensor data may be audio data that is captured by a microphone of a client device, such as microphone 140 of client device 110. In some implementations, the sensor data may be video data captured by one or more cameras 165 of client device 110. For example, an operating system, which may include one or more of the components of FIG. 1, may receive image data captured by sensor 180. The image data may include, for example, a gesture of a user and/or one or more other features that indicate that the user has interest in interacting with an application. At least a portion of the image data may be provided to hotword detection process, which may determine whether a particular feature is present in the image data, such as a user looking at the device, interacting with the device, performing a gesture, and/or other visual features that may be present in the image data. In some implementations, sensor data may include location data captured via a GPS component and utilized to determine whether the device is at a location that should trigger one or more applications.

At step 510, an indication that a feature was detected in the sensor data is provided by the feature detection process. Step 510 may share one or more characteristics with step 410 of FIG. 4. In some implementations, the detected feature may be, for example, audio data, video data, location data, and/or other sensor data captured via one or more components of a client device.

At step 515, audio data is provided to an interactor process. The interactor process may share one or more characteristics with interactor process 135. For example, the interactor process may be non-sandboxed in that the egress of data from the process is not limited in the same manner as feature detection process 125. In some implementations, step 515 may share one or more characteristics with step 415 of FIG. 4, but the sensor data may include, for example, audio data, image data, location data, and/or other captured sensor data.

Although many examples and description herein are directed primarily to the capture of audio data for verification of a hotword, a similar process may be utilized using video data. Video data from camera 165 may be analyzed to, for example, determine if an identified gesture is a video equivalent of a "hotword" (e.g., a gesture by a user and/or a feature to indicate interest in interacting with one or more components). This may include, for example, making a swiping motion with the hand to indicate that a particular action is to be activated by the client device. Also, for example, the sensor data described in FIG. 5 may be location data that is captured via a GPS component. Feature detection process 125 may check the location data to determine whether a trigger location is identified and one or more other components, such as interaction manager 120, may provide additional location data to an interactor process in response to determining that the requisite location has been detected.

As an example, a user may look at a device or a position on a device for a requisite amount of time. Image data may be provided to the operating system 105 from a sensor 180 (e.g., a camera) and provided to a detection process executing in a sandbox that can process the image data to determine if, for example, a user is looking at the device. Once the presence of the user action is detected, an interactor process 135 may be provided with the image data and/or additional image data to perform additional analysis.

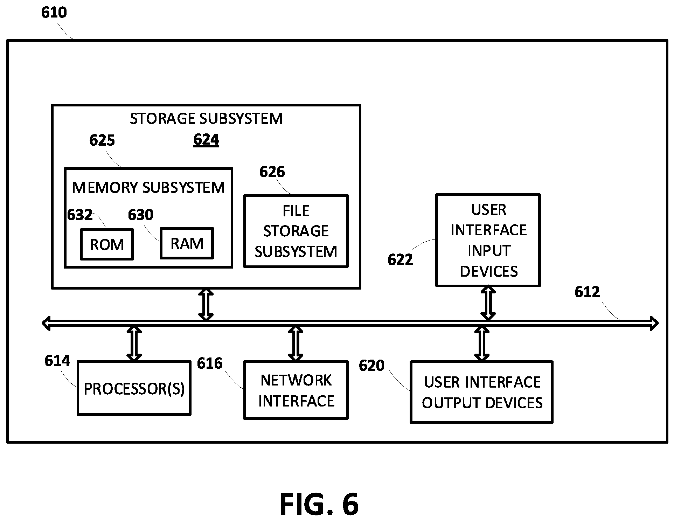

FIG. 6 is a block diagram of an example computer system 610. Computer system 610 typically includes at least one processor 614 which communicates with a number of peripheral devices via bus subsystem 612. These peripheral devices may include a storage subsystem 624, including, for example, a memory 625 and a file storage subsystem 626, user interface output devices 620, user interface input devices 622, and a network interface subsystem 616. The input and output devices allow user interaction with computer system 610. Network interface subsystem 616 provides an interface to outside networks and is coupled to corresponding interface devices in other computer systems.

User interface input devices 622 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into computer system 610 or onto a communication network.

User interface output devices 620 may include a display subsystem, a printer, a fax machine, or non-visual displays such as audio output devices. The display subsystem may include a cathode ray tube (CRT), a flat panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computer system 610 to the user or to another machine or computer system.

Storage subsystem 624 stores programming and data constructs that provide the functionality of some or all of the modules described herein. For example, the storage subsystem 624 may include the logic to perform selected aspects of method 300, method 400, and/or to implement one or more of client device 110, operating system 105, an operating system executing interaction manager 120 and/or one or more of its components, interactor process 135, and/or any other engine, module, chip, processor, application, etc., discussed herein.

These software modules are generally executed by processor 614 alone or in combination with other processors. Memory 625 used in the storage subsystem 624 can include a number of memories including a main random access memory (RAM) 630 for storage of instructions and data during program execution and a read only memory (ROM) 632 in which fixed instructions are stored. A file storage subsystem 626 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 626 in the storage subsystem 624, or in other machines accessible by the processor(s) 614.

Bus subsystem 612 provides a mechanism for letting the various components and subsystems of computer system 610 communicate with each other as intended. Although bus subsystem 612 is shown schematically as a single bus, alternative implementations of the bus subsystem may use multiple busses.

Computer system 610 can be of varying types including a workstation, server, computing cluster, blade server, server farm, or any other data processing system or computing device. Due to the ever-changing nature of computers and networks, the description of computer system 610 depicted in Fig. 6 is intended only as a specific example for purposes of illustrating some implementations. Many other configurations of computer system 610 are possible having more or fewer components than the computer system depicted in FIG. 6.

In situations in which the systems described herein collect personal information about users (or as often referred to herein, "participants"), or may make use of personal information, the users may be provided with an opportunity to control whether programs or features collect user information (*e.g.*, information about a user's social network, social actions or activities, profession, a user's preferences, or a user's current geographic location), or to control whether and/or how to receive content from the content server that may be more relevant to the user. Also, certain data may be treated in one or more ways before the data is stored or used, so that personal identifiable information is removed. For example, a user's identity may be treated so that no personal identifiable information can be determined for the user, or a user's geographic location may be generalized where geographic location information is obtained (such as to a city, ZIP code, or state level), so that a particular geographic location of a user cannot be determined. Thus, the user may have control over how information is collected about the user and/or used.

In some implementations, a method implemented by processor(s) of a client device is provided that includes providing, by an operating system of the client device, captured audio data to a sandboxed audio feature detection process that is sandboxed by the operating system. The method further includes receiving, by the operating system and from the sandboxed audio feature detection process, an indication that an audio feature was detected by the sandboxed audio feature detection process. The method further includes, responsive to receiving the indication, sending, by the operating system, the captured audio data to an interactor process. The operating system restricts the sandboxed audio feature detection process from sending the captured audio data to the interactor process.

These and other implementations of the technology disclosed herein can include one or more of the following features.

In some implementations, the method further includes, by the operating system and at intervals, terminating and restarting the audio feature detection process. In some versions of those implementations, the termination and restarting of the audio feature detection process is at irregular intervals. In some of those versions, the intervals are based on a corresponding received indication that the audio feature was detected in the audio data.

In some implementations, the method further includes, by the operating system and at intervals, forking in the sandbox, the sandboxed audio feature detection process.

In some implementations, the method further includes controlling, by the operating system, the sandbox to prevent the sandboxed audio feature detection process from sending captured audio. In some versions of those implementations, the controlling includes restricting egress of data from the sandboxed audio feature detection process. In some of those versions, restricting egress of data includes restricting instances of egress of data to data to data that satisfies a size threshold. For example, satisfying the size threshold can include being less than or equal to a certain quantity of bytes, such as 16 bytes, 10 bytes, or 4 bytes. In some additional or alternative versions, restricting egress of data includes restricting egress of data to data that conforms to a defined data schema.

In some implementations, the method further includes responsive to receiving the indication, rendering a notification that indicates non-sandboxed processing of the audio data. The notification can be suppressed or otherwise not rendered during processing of the audio data by the sandboxed audio feature detection process.

In some implementations, a method performed by processor(s) of a client device is provided that includes providing, by an operating system of a client device, sensor data to a sandboxed feature detection process that is executing, on the client device, in a sandbox that is controlled by the operating system. The sensor data is based on output from one or more sensors of the client device and/or one or more sensors communicatively coupled (e.g., via Bluetooth or other wireless modality) with the client device. The method further includes receiving, by the operating system and from the sandboxed feature detection process, an indication that a feature was detected by the sandboxed feature detection process. The method further includes, responsive to receiving the indication, sending, by the operating system, the sensor data to a non-sandboxed interactor process. The operating system restricts the sandboxed feature detection process from sending the sensor data.

These and other implementations of the technology disclosed herein can include one or more of the following features.

In some implementations, the sensor data includes image data and/or audio data. In some implementations where the sensor data includes image data, the feature is a certain gesture of a user, a fixed gaze of the user, a pose (head and/or body) having certain characteristics, and/or is co-occurrence of the certain gesture, the fixed gaze, and/or the pose with certain characteristics.

In some implementations, the method further includes, by the operating system and at intervals, terminating and restarting the sandboxed feature detection process.

In some implementations, the method further includes, by the operating system and at intervals, forking in the sandbox, the sandboxed feature detection process.

In some implementations, the method further includes restricting, by the operating system, the sandboxed feature detection process from sending captured sensor data. In some versions of those implementations, restricting the sandboxed feature detection process from sending captured sensor data includes restricting egress of data from the sandboxed feature detection process. In some of those versions, restricting egress of data includes restricting instances of egress of data to data to data that satisfies a size threshold and/or restricting egress of data to data that conforms to a defined data schema.

In some implementations, the method further includes responsive to receiving the indication, rendering a notification that indicates non-sandboxed processing of the sensor data. The notification can be suppressed or otherwise not rendered during processing of the sensor data by the sandboxed audio feature detection process. The notification can indicate a type of the sensor data and/or can indicate (or be selectable to indicate) an application that controls the interactor process and that also optionally controls the sandboxed feature detection process.

Various implementations can include a non-transitory computer readable storage medium storing instructions executable by one or more processors (e.g., central processing unit(s) (CPU(s)), graphics processing unit(s) (GPU(s)), digital signal processor(s) (DSP(s)), and/or tensor processing unit(s) (TPU(s)) to perform a method such as one or more of the methods described herein. Other implementations can include a client device that includes processor(s) operable to execute stored instructions to perform a method, such as one or more of the methods described herein.

## Claims

1. A method implemented by one or more processors (614) of a client device (110), the method comprising:
providing, by an operating system (105) of the client device, captured audio data to a sandboxed audio feature detection process that is executing, on the client device, in a sandbox that is controlled by the operating system;
receiving, by the operating system and from the sandboxed audio feature detection process, an indication that an audio feature was detected by the sandboxed audio feature detection process; and
responsive to receiving the indication, sending, by the operating system, the captured audio data to an interactor process, wherein the operating system restricts the sandboxed audio feature detection process from sending the captured audio data to the interactor process.

2. The method of claim 1, further comprising, at intervals and by the operating system, terminating and restarting the feature detection process.

3. The method of claim 1, further comprising, at intervals and by the operating system, forking, in the sandbox, the sandboxed audio feature detection process.

4. The method of claim 2 or claim 3, wherein the intervals are irregular intervals.

5. The method of claim 4, wherein the intervals are each based on a corresponding received indication that the audio feature was detected by the sandboxed audio feature detection process.

6. The method of any preceding claim, further comprising controlling, by the operating system, the sandbox to prevent the sandboxed audio feature detection process from sending captured audio, wherein controlling the sandbox to prevent the sandboxed audio feature detection process from sending captured audio comprises restricting egress of data from the sandboxed audio feature detection process to data that is less than or equal to a size threshold, wherein the size threshold is less than 10 bytes.

7. The method of claim 6, wherein the size threshold is less than 4 bytes.

8. The method of any preceding claim, further comprising controlling, by the operating system, the sandbox to prevent the sandboxed audio feature detection process from sending captured audio, wherein controlling the sandbox to prevent the sandboxed audio feature detection process from sending captured audio comprises restricting egress of data to data that conforms to a defined data schema.

9. The method of any preceding claim, further comprising:
responsive to receiving the indication, rendering a notification that indicates non-sandboxed processing of the audio data.

10. A computer program comprising instructions that when executed by one or more processors (614) of a computing system (610), cause the computing system to perform the method of any one of claims 1 to 9.

11. A client device (110) configured to perform the method of any one of claims 1 to 9.

## Patentansprüche

1. Verfahren, das durch einen oder mehrere Prozessoren (614) einer Client-Vorrichtung (110) implementiert wird, wobei das Verfahren Folgendes umfasst:
Bereitstellen, durch ein Betriebssystem (105) der Client-Vorrichtung, von erfassten Audiodaten an ein Sandbox-Audiomerkmalserkennungsverfahren, das auf der Client-Vorrichtung in einer durch das Betriebssystem gesteuerten Sandbox ausgeführt wird;
Empfangen, durch das Betriebssystem und aus dem Sandbox-Audiomerkmalserkennungsverfahren, einer Angabe, dass ein Audiomerkmal durch das Sandbox-Audiomerkmalserkennungsverfahren erkannt wurde; und
als Reaktion auf das Empfangen der Angabe, Senden, durch das Betriebssystem, der erfassten Audiodaten an ein Interaktorverfahren, wobei das Betriebssystem das Sandbox-Audiomerkmalserkennungsverfahren darin einschränkt, die erfassten Audiodaten an das Interaktorverfahren zu senden.

2. Verfahren nach Anspruch 1, ferner umfassend, in Intervallen und durch das Betriebssystem, Beenden und Neustarten des Merkmalserkennungsverfahrens.

3. Verfahren nach Anspruch 1, ferner umfassend, in Intervallen und durch das Betriebssystem, Forken, in der Sandbox, des Sandbox-Audiomerkmalserkennungsverfahrens.

4. Verfahren nach Anspruch 2 oder Anspruch 3, wobei es sich bei den Intervallen um unregelmäßige Intervalle handelt.

5. Verfahren nach Anspruch 4, wobei die Intervalle jeweils auf einer entsprechenden empfangenen Angabe basieren, dass das Audiomerkmal durch das Sandbox-Audiomerkmalserkennungsverfahren erkannt wurde.

6. Verfahren nach einem der vorhergehenden Ansprüche, ferner umfassend Steuern, durch das Betriebssystem, der Sandbox, um zu verhindern, dass das Sandbox-Audiomerkmalserkennungsverfahren erfasstes Audio sendet, wobei das Steuern der Sandbox, um zu verhindern, dass das Sandbox-Audiomerkmalserkennungsverfahren erfasstes Audio sendet, Einschränken des Abflusses von Daten aus dem Sandbox-Audiomerkmalserkennungsverfahren auf Daten umfasst, die weniger als oder gleich einem Größenschwellenwert sind, wobei der Größenschwellenwert weniger als 10 Byte beträgt.

7. Verfahren nach Anspruch 6, wobei der Größenschwellenwert weniger als 4 Byte beträgt.

8. Verfahren nach einem der vorhergehenden Ansprüche, ferner umfassend Steuern, durch das Betriebssystem, der Sandbox, um zu verhindern, dass das Sandbox-Audiomerkmalserkennungsverfahren erfasstes Audio sendet, wobei das Steuern der Sandbox, um zu verhindern, dass das Sandbox-Audiomerkmalserkennungsverfahren erfasstes Audio sendet, Einschränken des Abflusses von Daten auf Daten umfasst, die mit einem definierten Datenschema konform sind.

9. Verfahren nach einem der vorhergehenden Ansprüche, ferner umfassend:
als Reaktion auf das Empfangen der Angabe, Rendern einer Benachrichtigung, die eine Nicht-Sandbox-Verarbeitung der Audiodaten angibt.

10. Computerprogramm, umfassend Anweisungen, die bei Ausführung durch einen oder mehrere Prozessoren (614) eines Rechensystems (610) das Rechensystem dazu veranlassen, das Verfahren nach einem der Ansprüche 1-9 durchzuführen.

11. Client-Vorrichtung (110), die konfiguriert ist, um das Verfahren nach einem der Ansprüche 1-9 durchzuführen.

## Revendications

1. Procédé mis en œuvre par un ou plusieurs processeurs (614) d'un dispositif client (110), le procédé comprenant :
la fourniture, par un système d'exploitation (105) du dispositif client, de données audio capturées à un processus de détection de caractéristiques audio en bac à sable qui s'exécute, sur le dispositif client, dans un bac à sable qui est commandé par le système d'exploitation ;
la réception, par le système d'exploitation et en provenance du processus de détection de caractéristiques audio en bac à sable, d'une indication selon laquelle une caractéristique audio a été détectée par le processus de détection de caractéristiques audio en bac à sable ; et
en réponse à la réception de l'indication, l'envoi, par le système d'exploitation, des données audio capturées à un processus d'interaction, dans lequel le système d'exploitation restreint l'envoi, par le processus de détection de caractéristiques audio en bac à sable, des données audio capturées au processus d'interaction.

2. Procédé selon la revendication 1, comprenant en outre, à des intervalles et par le système d'exploitation, l'arrêt et le redémarrage du processus de détection de caractéristiques.

3. Procédé selon la revendication 1, comprenant en outre, à des intervalles et par le système d'exploitation, le clonage, dans le bac à sable, du processus de détection de caractéristiques audio en bac à sable.

4. Procédé selon la revendication 2 ou la revendication 3, dans lequel les intervalles sont des intervalles irréguliers.

5. Procédé selon la revendication 4, dans lequel les intervalles sont chacun basés sur une indication reçue correspondante selon laquelle la caractéristique audio a été détectée par le processus de détection de caractéristiques audio en bac à sable.

6. Procédé selon l'une quelconque revendication précédente, comprenant en outre la commande, par le système d'exploitation, du bac à sable pour empêcher le processus de détection de caractéristiques audio en bac à sable d'envoyer un audio capturé, dans lequel la commande du bac à sable pour empêcher le processus de détection de caractéristiques audio en bac à sable d'envoyer l'audio capturé comprend le fait de restreindre la sortie de données depuis le processus de détection de caractéristiques audio en bac à sable à des données qui sont inférieures ou égales à un seuil de taille, dans lequel le seuil de taille est inférieur à 10 octets.

7. Procédé selon la revendication 6, dans lequel le seuil de taille est inférieur à 4 octets.

8. Procédé selon l'une quelconque revendication précédente, comprenant en outre la commande, par le système d'exploitation, du bac à sable pour empêcher le processus de détection de caractéristiques audio en bac à sable d'envoyer l'audio capturé, dans lequel la commande du bac à sable pour empêcher le processus de détection de caractéristiques audio en bac à sable d'envoyer l'audio capturé comprend le fait de restreindre la sortie de données à des données qui sont conformes à un schéma de données défini.

9. Procédé selon l'une quelconque revendication précédente, comprenant en outre :
en réponse à la réception de l'indication, le rendu d'une notification qui indique un traitement non en bac à sable des données audio.

10. Programme informatique comprenant des instructions qui, lorsqu'elles sont exécutées par un ou plusieurs processeurs (614) d'un système informatique (610), amènent le système informatique à réaliser le procédé selon l'une quelconque des revendications 1 à 9.

11. Dispositif client (110) configuré pour réaliser le procédé selon l'une quelconque des revendications 1 à 9.
